# EUROPEAN PATENT APPLICATION

(11) **EP 3 476 886 A1**
(43) Date of publication of application: **01.05.2019**
(21) Application number: 17820051.5
(22) Date of filing: 23.06.2017
(51) Int. Cl.: C08J 5/24, B29C 70/14, B32B 27/04

(54) **PREPREG AND PRODUCTION METHOD THEREFOR**

(30) Priority: 28.06.2016 JP 2016127270
(71) Applicant: Toray Industries, Inc., Tokyo 103-8666 (JP)
(72) Inventor: NAITO, Yuta, Iyo-gun Ehime 791-3193 (JP); KAWAMOTO, Shiori, Iyo-gun Ehime 791-3193 (JP); SATO, Narumichi, Iyo-gun Ehime 791-3193 (JP); TAKETA, Ichiro, Iyo-gun Ehime 791-3193 (JP); FUJITA, Yuzo, Iyo-gun Ehime 791-3193 (JP); KARAKI, Takuya, Iyo-gun Ehime 791-3193 (JP)
(74) Representative: Mewburn Ellis LLP
(86) International application number: PCT/JP2017/023199
(87) International publication number: WO 2018/003694

(57) **Abstract**

A prepreg, including: a fiber layer containing unidirectionally arranged discontinuous carbon fibers and a thermosetting resin; and a resin layer existing on at least one side of said fiber layer and containing a thermosetting resin and a thermoplastic resin; in which said prepreg contains carbon fibers having an areal weight of fibers of 120 to 300 g/m², and has a mass fraction of resin of 25 to 50% with respect to the whole mass of said prepreg; and in which a temperature at which a coefficient of interlayer friction is 0.05 or less is in a temperature range of from 40 to 80°C, the interlayer friction being caused at the contact interface between layers of said prepreg when the middle one of three layers that are each made of said prepreg and laid up is pulled out, said coefficient of interlayer friction being measured at 10°C intervals in a temperature range of from 40 to 80°C under conditions including a pulling speed of 0.2 mm/min, a perpendicular stress of 0.08 MPa, and a pulling length of 1 mm. There is provided a prepreg with which a wrinkle-free preform can be produced and which expresses excellent mechanical property in carbon fiber reinforced plastics made thereof.

## Description

### TECHNICAL FIELD

The present invention relates to a prepreg for obtaining carbon fiber reinforced plastics and to a method of producing the same.

### BACKGROUND ART

Carbon fiber reinforced plastics have high specific strength and specific modulus, excellent mechanical property, and high performance properties such as weather resistance and chemical resistance, and thus are attracting attention in the context of industrial applications. Currently, the applications have been extended to aircrafts, spacecrafts, automobiles, railways, ships, sports, and the like, and the demand for carbon fiber reinforced plastics is increasing year by year.

Among these applications, structural members in particular, which require mechanical property, are ones for which cured prepreg laminates are often used. Among prepregs, prepregs having carbon fibers unidirectionally arranged therein have a high fiber volume fraction, whereby the high fiber elastic modulus and strength of carbon fibers can be maximumly utilized. In addition, when the prepreg is impregnated with a high performance resin in such a way that the prepreg has less variation in areal weight, the obtained carbon fiber reinforced plastics have stable quality and hence serve as materials having high mechanical property and reliability.

In a process of producing structural members in which prepregs are used, a forming step is the key that influences the quality and productivity of the members. The forming step is one in which a prepreg is made to conform to a three dimensional shape and formed into a preform before undergoing a molding/curing step with an autoclave or the like. When prepreg layers are formed layer by layer in the forming step, a high quality preform can be obtained, but such a process takes a longer period of time and reduces productivity. Then, in order to enhance the productivity, a forming method called hot forming, in which prepreg sheets are previously laid up in planar form into a prepreg laminate at high speed using an automatic machine, and then the prepreg laminate is formed into a three dimensional shape while heat is applied thereto, has been developed. According to the forming method of Patent Document 1, the bending deformation of each layer of the prepreg laminate is accompanied by interlayer slippage, whereby the prepreg laminate is allowed to conform to a shape.

### Citation List

### Patent Document

Patent Document 1: WO 96/06725

### SUMMARY OF INVENTION

### Technical Problem

However, the forming method of Patent Document 1 may pose a problem in that the bending of each of the layers precedes interlayer slippage, thereby generating wrinkles on the preform, or that the fiber is tautened at corner portions during molding, thereby generating resin rich parts between the fiber and the mold. Any wrinkle or resin rich part of the preform can cause a reduction in the surface quality of the obtained fiber reinforced plastic and become a defect that reduces the structural strength of the member.

Now, in view of such problems in the background art, an object of the present invention is to provide a prepreg that has excellent drapeability for making the prepreg laminate conform to a three dimensional shape and that can be formed into carbon fiber reinforced plastics having high mechanical property.

### Solutions to Problem

That is, the present invention provides the following prepreg. In other words, it is a prepreg including: a fiber layer containing unidirectionally arranged discontinuous carbon fibers and a thermosetting resin; a resin layer existing on at least one side of the fiber layer and containing a thermosetting resin and a thermoplastic resin; in which the prepreg contains the carbon fibers having an areal weight of fibers of 120 to 300 g/m², and has a mass fraction of resin of 25 to 50% with respect to the whole mass of the prepreg; in which a temperature at which a coefficient of interlayer friction is 0.05 or less is in a temperature range of from 40 to 80°C, in which, when the middle one of three layers that are each made of the prepreg and laid up is pulled out, the coefficient of interlayer friction is caused at the contact interface between the layers of the prepreg, and in which the coefficient of interlayer friction is measured at 10°C intervals in a temperature range of from 40 to 80°C under the conditions including a pulling speed of 0.2 mm/min, a perpendicular stress of 0.08 MPa, and a pulling length of 1 mm.

### Advantageous Effects of Invention

According to the present invention, it is possible to produce a wrinkle-free preform in a hot forming step in which the planar prepreg laminate is made to conform to a three dimensional shape, and it is possible to obtain a prepreg that can be formed into carbon fiber reinforced plastics having excellent mechanical property.

### BRIEF DESCRIPTION OF DRAWINGS

Fig. 1 is a conceptual illustration showing an example of an incision pattern inserted in the fiber layer.
Fig. 2 is a conceptual illustration showing an example of an incision pattern inserted in the fiber layer.
Fig. 3 a) is a cross-sectional view showing a measurement method for a coefficient of interlayer friction in the present invention, and Fig. 3 b) is a plan view showing a measurement method for a coefficient of interlayer friction in the present invention.
Fig. 4 is a schematic view showing a drapeability measurement method.

### DESCRIPTION OF EMBODIMENTS

The present inventors have vigorously studied not only to make it possible to produce a wrinkle-free preform in a hot forming step in which the prepreg laminate formed by laying up a plurality of sheets of prepreg containing a thermosetting resin and carbon fibers is made to conform to a three dimensional shape, but also to obtain a prepreg that can be formed into carbon fiber reinforced plastics expressing excellent mechanical property. As a result, the present inventors have found out that the above-mentioned problems of the present invention can be solved by using unidirectionally arranged discontinuous carbon fibers, a fiber layer containing the carbon fibers and a thermosetting resin, and a resin layer existing on at least one side of the fiber layer and containing a thermosetting resin and a thermoplastic resin for affording higher toughness, and by allowing a coefficient of friction at the contact interface between the sheets of the prepreg (hereinafter referred to as coefficient of interlayer friction) to be low in order to facilitate slippage between the layers in the prepreg laminate.

The fiber layer in the prepreg according to the present invention contains unidirectionally arranged discontinuous carbon fibers and a thermosetting resin. When the prepreg having unidirectionally arranged carbon fibers that are continuous is bent and formed into a shape, the prepreg is more likely to have wrinkles caused on the compressed side of the bending neutral axis because the prepreg is tautened on the pulled side of the bending neutral axis. Containing discontinuous carbon fibers allows such tautness to be suppressed and thereby allows generation of wrinkles to be suppressed when the prepreg is bent and formed into a shape. Furthermore, in a case where a carbon fiber reinforced plastic is produced from the prepreg, the stress transfer of the cured matrix resin allows the plastic to express high elastic modulus and strength because the prepreg has unidirectionally arranged carbon fibers. The mass ratio of the discontinuous carbon fibers to the carbon fibers constituting the fiber layer is not limit to a particular value, and the mass ratio of the discontinuous carbon fibers to the mass of the whole carbon fibers constituting the fiber layer is preferably 50% or more because it can effectively suppress the tautness of the base material. It is more preferably 70 mass% or more, and still more preferably 100 mass%. The discontinuous carbon fiber and the continuous fiber that are different in kind from each other may be used.

In the present invention, "unidirectionally arranged" means that 90% by number or more of the carbon fibers existing in the prepreg make an angle within a range of ±10° with a direction in the plane of the prepreg. More preferably, it means that 90% by number or more of the carbon fibers make the angle within a range of ±5° with the direction. Such a direction is referred to as a fiber direction. In this regard, the carbon fibers are preferably arranged in the longitudinal direction of the prepreg, and the fiber direction hereinafter refers to the longitudinal direction of the prepreg unless particularly limited.

In the present invention, the discontinuous carbon fiber refers to a carbon fiber whose fiber length is limited in the prepreg, in other words, a carbon fiber whose fiber length is shorter than the full length of the prepreg in the fiber direction

The fiber length of the discontinuous carbon fiber is not limited to a particular value, and is preferably decided on the basis of the balance between the mechanical property and the shape complexity that are required by carbon fiber reinforced plastics produced using the prepreg. The fiber length that is shorter makes it possible to suppress the tautness of the fiber on the pulled side of the bending at a corner portion having a smaller radius of curvature, and thereby enhances the drapeability, but reduces the mechanical property of the carbon fiber reinforced plastic made using the fiber. The fiber length that is longer causes the tautness of the fiber on the pulled side of the bending at a corner portion having a smaller radius of curvature, and thereby reduces the drapeability, but enhances the mechanical property of the carbon fiber reinforced plastic made using the fiber. In view of the balance between the drapeability and the mechanical property of the carbon fiber reinforced plastic made using the fiber, the fiber length is in a range of preferably from 5 to 100 mm, more preferably from 10 to 50 mm. The carbon fibers may have different fiber lengths in mixture, but all carbon fibers preferably have substantially the same length, considering the stability of the quality of the prepreg. "Substantially the same length" means that 90% by number or more of the carbon fibers have a fiber length within a range of ±10% with respect to the average of the lengths of all carbon fibers.

Substantially all carbon fibers contained in the fiber layer may be discontinuous, or incisions may be inserted in the carbon fibers only in the regions of the prepreg that are used for formation. From a drapeability viewpoint, substantially all carbon fibers of the fiber layer are particularly preferably discontinuous. Here, that substantially all carbon fibers of the fiber layer are discontinuous means that 5% by number or less of the carbon fibers constituting the fiber layer are not discontinuous. Allowing substantially all carbon fibers to be constituted by discontinuous carbon fibers enables the tautness of the prepreg at corner portions to be further suppressed.

Methods of producing fiber layers containing unidirectionally arranged discontinuous carbon fibers are not limited to particular ones. Production may be carried out by previously producing discontinuous carbon fibers and then making a composite from them and a thermosetting resin, or production may be carried out by previously producing a fiber layer containing continuous carbon fibers and then processing the carbon fibers into discontinuous ones. Examples of techniques of previously producing discontinuous carbon fibers include: a technique in which carbon fibers are wound onto rolls having different speeds, and part of the carbon fibers are cut off utilizing the speed differences; a technique in which juxtaposed short tows are unidirectionally arranged; a technique in which juxtaposed discontinuous carbon fibers are unidirectionally arranged; and the like. Examples of techniques of processing continuous carbon fibers in a fiber layer containing the carbon fibers into discontinuous ones include a technique in which continuous carbon fibers are processed into discontinuous ones by cutting off the continuous carbon fibers in a fiber layer containing the carbon fibers (hereinafter referred to also as "inserting incisions"). Using the technique in which continuous carbon fibers are processed into discontinuous ones by inserting incisions in a fiber layer containing the continuous carbon fibers is preferable in that the technique affords a fiber layer having excellent surface smoothness and provides the prepreg with excellent interlayer slippage through the effect synergistic with the effect of the below-mentioned barrier layer. Rotary blades, razors, cutting dies, and the like can be used to cut carbon fibers.

Inserting incisions in unidirectionally arranged continuous carbon fibers in a fiber layer containing the continuous fibers affords a fiber layer containing discontinuous carbon fibers in a state in which control is kept on the arrangement direction of the carbon fibers and the distance between the discontinuous carbon fibers. This makes it possible to suppress a strength reduction due to the ununiformity in a fiber bundle.

The resin layer may have any or no inserted incisions. Inserting incisions that even penetrate the resin layer makes it possible to anticipate the effect of facilitating the exhaustion of air from the inside of the laminate by evacuating the laminate in producing the laminate in which a plurality of prepreg sheets are laid up. On the other hand, having no incisions that penetrate the resin layer also affords drapeability not less than having any inserted incisions that penetrate the resin layer.

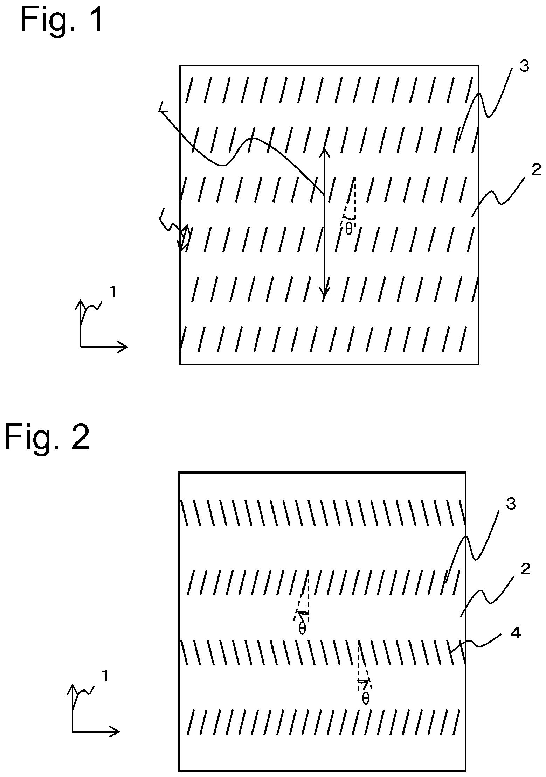

The length of an incision is not limited to a particular value, and the incisions are preferably disconnected. Inserting disconnected incisions makes it possible to suppress the amount of opening of each incision and enhance the surface quality. Here, "disconnected incisions" mean that, for example, as shown in Fig. 1, the incision length 1 is limited in the prepreg 2, in other words, that the incision length 1 is shorter than the full length of the prepreg in the fiber direction. As below-mentioned, inserting incisions obliquely to the fiber direction such that the incisions make a given angle of θ with the fiber direction of the carbon fibers enables substantially all carbon fibers to be discontinuous even if the incisions are disconnected as shown in Fig. 1.

The incision angle is not limited to a particular value, and the incisions are preferably inserted obliquely to the fiber direction. This can further enhance the conformity of the prepreg to a three dimensional shape and the mechanical property of the carbon fiber reinforced plastics. Assuming that the angle which the incision makes with the fiber direction of the carbon fibers is an incision angle θ, the absolute value of θ is preferably 2 to 60°. In particular, the absolute value of θ is preferably 25° or less in that it remarkably enhances the mechanical property, particularly tensile strength. In contrast, the absolute value of θ that is smaller than 2° makes it difficult to insert incisions stably. That is, using a blade to insert incisions that are closer to parallel to the fiber direction causes the carbon fibers to elude the blade more easily and makes it more difficult to insert the incisions, securing the position precision of the incisions at the same time. From this viewpoint, the absolute value of θ is preferably 2° or more.

More preferably, the absolute value of θ is substantially identical, and furthermore, the incisions include both positive incisions, whose θ is positive, and negative incisions, whose θ is negative. The conceptual illustration of such an incision pattern is shown in Fig. 2. In Fig. 2, the carbon fibers are arranged in the fiber direction 1 of the prepreg 2. The carbon fibers are disconnected by the positive incisions 3 and the negative incisions 4 and thus made discontinuous. As shown in Fig. 2, the positive incision 3, as used here, refers to an incision whose incision angle θ is in a range of 0° < θ < 90° clockwise with respect to the fiber direction 1 as 0°. In addition, the negative incision 4, as shown in Fig. 2, refers to an incision whose incision angle θ is in a range of 0° < θ < 90° counterclockwise with respect to fiber direction 1 as 0°. The "absolute value of θ is substantially identical" means that the absolute value of θ of each incision is in a range of ±1 ° within the average value of the absolute values of θ of all incisions. Inserting not only positive incisions but also negative incisions in the prepreg to be incised makes it possible that stretching the incised prepreg generates in-plane shear deformation at or near the positive incisions and, at the same time, reverse shear deformation at or near the negative incisions, and thus that the prepreg is stretched while the in-plane shear deformation as a whole is suppressed.

More preferably, the prepreg includes positive incisions and negative incisions both of which are substantially the same in number. The phrase, "includes positive incisions and negative incisions both of which are substantially the same in number", means that the number of incisions whose θ is positive and the number of incisions whose θ is negative are each 45% to 55% on a percentage by number basis. In laying up sheets of the obtained prepreg that includes only positive incisions or only negative incisions, the direction of the incisions varies depending on whether the prepreg is seen from the front or from the back. Accordingly, in producing carbon fiber reinforced plastics, there is a possibility that a troublesome step is added for controlling laying-up procedures to match the incision direction to a desired one every time. In contrast, sheets of the prepreg having an incision pattern in which the absolute values of θ between the incisions and the arrangement direction of the carbon fibers are substantially identical and in which the positive incisions and the negative incisions are substantially the same in number can be laid up independent of the incision direction.

The thermosetting resin used in the fiber layer is not limited to a particular one, and should be a resin that undergoes a cross-linking reaction with heat to form an at least partial three-dimensional cross-linked structure. Examples of such thermosetting resins include an unsaturated polyester resin, a vinyl ester resin, an epoxy resin, a benzoxazine resin, a phenol resin, a thiourea resin, a melamine resin, and a polyimide resin. Modified products of these resins and blends of two or more kinds of resins are also usable. In addition, these thermosetting resins may be resins that are self-curable with heat, and it is also possible to blend such a resin with a hardener, an accelerator, or the like. Fillers for enhancing the electrical conductivity and the heat resistance may be blended in.

Among these thermosetting resins, epoxy resins are preferably used for their excellent balance of heat resistance, mechanical property, and adhesiveness to carbon fibers. It is particularly preferable to use an epoxy resin having an amino group or a structure derived from phenol.

As epoxy resins having an amino group, an aminophenol type epoxy resin, a glycidyl aniline type epoxy resin, and a tetraglycidyl amine type epoxy resin are preferably used. As glycidyl amine type epoxy resins, tetraglycidyldiaminodiphenyl, triglycidyl-p-aminophenol, triglycidyl aminocreosol, and the like can be mentioned. A tetraglycidyl amine type epoxy resin having an average epoxide equivalent weight (EEW) within a range of 100 to 115, which is a high-purity tetraglycidyl amine type epoxy resin, and an aminophenol type epoxy resin having an average EEW within a range of 90 to 104, which is a high-purity aminophenol type epoxy resin, are preferably used because they suppress volatile matters that may form voids in the obtained carbon fiber reinforced plastic. Tetraglycidyldiaminodiphenylmethane has excellent heat resistance and is preferably used as a resin for a composite material for a structural member of an aircraft.

In addition, a glycidyl ether type epoxy resin having a structure derived from phenol is also preferably used as a thermosetting resin. Examples of such epoxy resins include a bisphenol A type epoxy resin, a bisphenol-F type epoxy resin, a bisphenol S type epoxy resin, a phenol novolac type epoxy resin, a creosol novolac type epoxy resin, and a resorcinol type epoxy resin. A bisphenol A type epoxy resin having an average EEW within a range of 170 to 180, which is a high-purity bisphenol A type epoxy resin, and a bisphenol F type epoxy resin having an average EEW within a range of 150 to 165, which is a high-purity bisphenol F type epoxy resin, are preferably used because they suppress volatile matters that may form voids in the obtained carbon fiber reinforced plastic.

A bisphenol A type epoxy resin, a bisphenol F type epoxy resin, and a resorcinol type epoxy resin, which are liquid, have low viscosity and thus are preferably used in combination with other epoxy resins.

In addition, a bisphenol A type epoxy resin that is solid at room temperature (about 25°C), as compared with a bisphenol A type epoxy resin that is liquid at room temperature (about 25°C), has a lower cross-linking density in the cured resin, and thus the heat resistance of the cured resin is lower, but the toughness is higher. Accordingly, such a resin is preferably used in combination with a glycidyl amine type epoxy resin, a liquid bisphenol A type epoxy resin, or a bisphenol F type epoxy resin.

Besides, an epoxy resin having a naphthalene skeleton forms a cured resin having low absorbency and high heat resistance. In addition, a biphenyl type epoxy resin, a dicyclopentadiene type epoxy resin, a phenolaralkyl type epoxy resin, and a phenyl fluorine type epoxy resin also form cured resins having low absorbency, and thus can be preferably used.

In addition, a urethane modified epoxy resin and an isocyanate modified epoxy resin form cured resins having high fracture toughness and elongation, and thus can be preferably used.

These epoxy resins may be used alone, or may also be suitably blended and used. When an epoxy resin having a bifunctional, trifunctional, or higher-functional group is added to a resin composition, the resulting prepreg can satisfy all of workability, processability, and heat resistance under wetting conditions which is required for the fiber reinforced complex; therefore, this is preferable. In particular, a combination of a glycidyl amine type epoxy resin and a glycidyl ether type epoxy resin can achieve processability, heat resistance, and water resistance. In addition, blending at least one epoxy resin that is liquid at room temperature with at least one epoxy resin that is solid at room temperature is effective in imparting both preferred tackiness properties and drape property to the prepreg.

A phenol novolac type epoxy resin and a creosol novolac type epoxy resin have high heat resistance and low absorbency, and thus can form cured resins having high heat and water resistance. By using such a phenol novolac type epoxy resin and a creosol novolac type epoxy resin, the tackiness properties and drape property of the prepreg can be adjusted while enhancing the heat and water resistance.

A hardener for the epoxy resin may be any compound having an active group that is capable of reacting with an epoxy group. Among others, a compound having an amino group, an acid anhydride group, or an azido group is preferable as a hardener. More specific examples of hardeners include various isomers of dicyandiamide, diaminodiphenylmethane, and diaminodiphenyl sulfone; amino benzoic acid esters, various acid anhydrides, phenol novolac resins, creosol novolac resins, polyphenols, imidazole derivatives, aliphatic amines, tetramethylguanidine, thiourea added amines, methyl hexahydrophthalic acid anhydrides, other carboxylic acid anhydrides, carboxylic acid hydrazides, carboxylic acid amides, polymercaptans, boron trifluoride ethylamine complexes, other Lewis acid complexes, and the like. These hardeners may be used alone or in combination.

By using an aromatic diamine as a hardener, a cured resin having excellent heat resistance can be obtained. In particular, various isomers of diaminodiphenyl sulfone form cured resins having excellent heat resistance, and thus are the most preferable. It is preferable that the amount of an aromatic diamine hardener added is a stoichiometrically equivalent amount. However, in some cases, the amount used is about 0.7 to 0.9 equivalents of the epoxy resin, whereby a cured resin having a high elastic modulus can be obtained.

In addition, by using a combination of imidazole or dicyandiamide with a urea compound (for example, 3-phenol-1,1-dimethylurea, 3-(3-chlorophenyl)-1,1-dimethylurea, 3-(3,4-dichlorophenyl)-1,1-dimethylurea, 2,4-toluene bisdimethylurea, or 2,6-toluene bisdimethylurea) as a hardener, whereas curing occurs at a relatively low temperature, high heat resistance and water resistance can be achieved.

In a case where an acid anhydride is used as a hardener, as compared with the case of using an amine compound, a cured resin having relatively lower absorbency is obtained.

Further, by using a substance that may form one of these hardeners, such as a microencapsulation substance, the preservation stability of the prepreg can be enhanced. In particular, the tackiness properties and drape property are less likely to change even when the prepreg is allowed to stand at room temperature.

In addition, a product resulting from the partial preliminary reaction of the epoxy resin or the hardener, or alternatively both of them may also be added to the composition. In some cases, this method is effective in viscosity adjustment or preservation stability improvement.

A thermoplastic resin may be blended with and dissolved in the thermosetting resin. It is usually preferable that such a thermoplastic resin is a thermoplastic resin having a bond selected from a carbon-carbon bond, an amide bond, an imide bond, an ester bond, an ether bond, a carbonate bond, a urethane bond, a thioether bond, a sulfone bond, and a carbonyl bond, but the resin may also partially have a cross-linked structure.

In addition, it is also possible that the thermoplastic resin has or does not have crystallinity. In particular, it is preferable that at least one kind of resin selected from the group consisting of polyamides, polycarbonates, polyacetals, polyphenyleneoxides, polyphenylenesulfides, polyarylates, polyesters, polyamideimides, polyimides, polyetherimides, polyimides having a phenyltrimethylindan structure, polysulfones, polyethersulfones, polyetherketones, polyetheretherketones, polyaramides, polyethemitriles, and polybenzimidazoles is blended with and dissolved in the thermosetting resin.

These thermoplastic resins may be commercially available polymers, or may also be so-called oligomers having a molecular weight lower than that of commercially available polymers. As oligomers, oligomers having a functional group reactive with the thermosetting resin at the terminal or in the molecular chain are preferable.

In a case where a blend of a thermosetting resin and a thermoplastic resin is used, as compared with the case of using only either of them, the brittleness of the thermosetting resin can be covered with the toughness of the thermoplastic resin, while the difficulty in molding of the thermoplastic resin can be covered with the thermosetting resin. As a result, the blend can serve as a well-balanced base compound. From the viewpoint of balance, it is preferable that the mass ratio of the thermosetting resin to the thermoplastic resin is within a range of 100:2 to 100:50, more preferably within a range of 100:5 to 100:35.

As a carbon fiber, any type of carbon fiber may be used according to the intended application, whether the carbon fiber is a polyacrylnitrile-based carbon fiber or a pitch-based carbon fiber. However, from the viewpoint of interlayer toughness and impact resistance, carbon fibers having a tensile modulus of 230 to 400 GPa are preferable. In addition, from the viewpoint of strength, it is preferable to use carbon fibers having a tensile strength of 4.4 to 7.0 GPa because, as a result, a carbon fiber reinforced plastic having high stiffness and mechanical strength is obtained. In addition, the tensile strain is also an important factor, and carbon fibers having a tensile strain of 1.7 to 2.3% are preferable. Accordingly, carbon fibers having all the following characteristics are the most suitable: a tensile modulus of at least 230 GPa, a tensile strength of at least 4.4 GPa, and a tensile strain of at least 1.7%.

As commercially available products of preferably used carbon fibers, "TORAYCA (registered trademark)" T1100G-24K, "TORAYCA (registered trademark)" T1100G-12K, "TORAYCA (registered trademark)" T800S-24K, "TORAYCA (registered trademark)" T800S-12K, "TORAYCA (registered trademark)" T300-3K, and "TORAYCA (registered trademark)" T700S-12K (all manufactured by Toray Industries, Inc.) can be mentioned, for example.

The areal weight of the carbon fibers contained in the prepreg of the present invention is 120 to 300 g/m², still more preferably 140 to 280 g/m². Here, "areal weight of fibers" is the mass of carbon fibers contained per unit area of the prepreg. In a case where the areal weight of fibers is less than 120 g/m², a larger number of laid-up prepreg layers are required in order to obtain a carbon fiber reinforced plastic with a desired thickness, resulting in a problem in that the number of production steps increases. On the other hand, in a case where the areal weight of fibers is more than 300 g/m², the resin is difficult to impregnate into fibers. As a result, non-impregnated parts remain as voids in the formed carbon fiber reinforced plastic, which may lead to the deterioration of physical properties.

In the prepreg of the present invention, the mass fraction of resin with respect to the total mass of the prepreg is 25 to 50%, more preferably 30 to 40%. Here, the "mass fraction of resin" is the mass proportion of the total resin component excluding carbon fibers relative to the total mass of the prepreg. When the mass fraction of resin is more than 50%, the carbon fiber content is reduced. As a result, the resulting carbon fiber reinforced plastic has lower strength and elastic modulus. In addition, when the mass fraction of resin is less than 25%, particularly in the configuration of the present invention where a resin layer is provided on the prepreg surface, the resin amount in the fiber layer is small, making it impossible to completely cover the fiber surface with the resin. As a result, cracking is likely to occur between fibers, whereby unexpected fracture may be caused, or quality variation may also increase.

The resin layer contains a thermosetting resin and a thermoplastic resin. The thermosetting resin is not limited to a particular resin type, and any of the same thermosetting resins as illustrated above can be used. As the thermosetting resin in the resin layer, the same thermosetting resin as used in the fiber layer or a thermosetting resin different from the one used in the fiber layer may be used.

The resin layer preferably contains a thermoplastic resin from the viewpoint of the mechanical property of the resulting carbon fiber reinforced plastic. A carbon fiber reinforced plastic formed by curing a prepreg laminate is more likely to cause interlayer fracture under impact, and to cope with this, allowing the resin layer to contain a thermoplastic resin and thereby enhancing the interlayer toughness affords a carbon fiber reinforced plastic having excellent impact resistance. The thermoplastic resin is not limited to a particular resin, and may be any of the same thermoplastic resins as illustrated above.

The resin layer may be placed on only one side of the fiber layer or may also be placed on both sides. Placing the resin layer on both sides is preferable in that the mechanical property in particular is enhanced. The resin layer is placed on the surface of the fiber layer using, for example, any method described in the EXAMPLES. Furthermore, a layer of release paper and the like may be on the fiber layer during the storage of the prepreg.

In one of the preferable aspects of the resin layer, the resin layer contains a solid thermoplastic resin soluble in a thermosetting resin. Here, a solid thermoplastic resin soluble in a thermosetting resin means a thermoplastic resin that has a clear boundary with a thermosetting resin at 40 to 80°C, which is a temperature for the forming step, and that has a property such that the thermoplastic resin dissolves in a thermosetting resin when the thermoplastic resin is dispersed in the thermosetting resin, heated in an autoclave to 180°C at a temperature ramp rate of 1.5°C/min, and then heat-pressed and cured at a temperature of 180°C at a pressure of 7 kg/cm² for 2 hours. Here, the clear boundary means that the interface between the solid thermoplastic resin and the surrounding thermosetting resin is clearly visible in the cross-section of the prepreg observed under an optical microscope. The solid thermoplastic resin does not dissolve at a temperature of 40 to 80°C, and accordingly the resin layer can be provided with a larger amount of thermoplastic resin, whereby it is possible to further enhance the toughness of the resin layer existing between layers after molding.

The solid thermoplastic resin soluble in the thermosetting resin may be the same kind as any of the above various thermoplastic resins. Among them, polyethersulfone is preferable in that it has excellent toughness and accordingly improves the impact resistance significantly.

The solid thermoplastic resin soluble in the thermosetting resin may be in the form of a non-woven fabric or fibers. However, in order to obtain better moldability, particles are preferable. When the solid thermoplastic resin is in the form of particles, at the time of interlayer slippage, the physical relationship of the particles can be changed. Therefore, as compared with the form of a non-woven fabric or fibers, the coefficient of interlayer friction can be more reduced. The particle shape may be any one of spherical, nonspherical, porous, needle-like, whisker-like, and flaky, but a spherical shape is particularly preferable in that it allows the contact area between particles to be smaller. The particles in spherical form preferably have a sphericity of 90 to 100.

In another preferable aspect of the resin layer, the resin layer contains a thermoplastic resin insoluble in a thermosetting resin. Here, a thermoplastic resin insoluble in the thermosetting resin means that when the thermoplastic resin is dispersed in a thermosetting resin, heated in an autoclave to 180°C at a temperature ramp rate of 1.5°C/min, and then heat-pressed and cured at a temperature of 180°C and a pressure of 7 kg/cm² for 2 hours, the thermoplastic resin does not dissolve in the thermosetting resin. The thermoplastic resin insoluble in the thermosetting resin is preferably a thermoplastic resin having a glass transition temperature within a range of 80°C to 180°C. A thermoplastic resin having such a relatively high glass transition temperature does not undergo deformation during heating and curing. Thus, the resulting carbon fiber reinforced plastic obtained by curing a prepreg laminate has stable interlayer thickness and also has excellent interlayer toughness, resulting in a carbon fiber reinforced plastic having high compression strength under wet-heat. The thermoplastic resin having a glass transition temperature of less than 80°C results in a carbon fiber reinforced plastic having a poorer balance between interlayer toughness and compression strength under wet-heat. On the other hand, in a case where the thermoplastic resin has a glass transition temperature of more than 180°C, the toughness of the thermoplastic resin itself tends to be reduced, and the interfacial adhesiveness between the thermoplastic resin and the matrix resin is lowered, resulting in producing a carbon fiber reinforced plastic having lower interlayer toughness.

The thermoplastic resin insoluble in the thermosetting resin may be the same kind as any of the above various thermoplastic resins. Among them, polyamide is most preferable in that it has excellent toughness and accordingly improves the impact resistance significantly. Among polyamides, polyamide 12, polyamide 6, polyamide 66, polyamide 11, polyamide 6/12 copolymers, and a polyamide modified to have a semi-IPN (macromolecular interpenetrating network structure) with an epoxy compound (semi-IPN polyamide) described in Example 1 of Japanese Patent Laid-open Publication No. 1-104624 have particularly excellent adhesive strength with a thermosetting resin. Therefore, the delamination strength as a carbon fiber reinforced plastic is high, and the impact resistance is also high, and hence these polyamides are preferable. In addition, the resin layer containing a thermoplastic resin insoluble in the thermosetting resin may further contain a thermoplastic resin soluble in the thermosetting resin. Allowing a thermoplastic resin insoluble in the thermosetting resin to further exist in the resin layer in which the thermosetting resin and the thermoplastic resin soluble in the thermosetting resin are dissolved can enhance the toughness between the layers after molding.

The thermoplastic resin insoluble in the thermosetting resin may be in the form of a non-woven fabric or fibers. However, in order to obtain better moldability, particles are preferable. When the thermoplastic resin is in the form of particles, at the time of interlayer slippage in the prepreg, the physical relationship of the particles can be changed. Therefore, as compared with the form of a non-woven fabric or fibers, the coefficient of interlayer friction can be more reduced. The particle shape may be any one of spherical, nonspherical, porous, needle-like, whisker-like, and flaky, but a spherical shape is particularly preferable in that it allows the contact area between particles to be smaller. The particles in spherical form preferably have a sphericity of 90 to 100. In addition, in a case where a soluble thermoplastic resin and an insoluble thermoplastic resin exist, it is preferable that both of them are particles because it contributes to a reduction in frictional resistance.

In this regard, the sphericity of the thermoplastic resin is measured by the following procedures, irrespective of whether the thermoplastic resin is soluble or insoluble in the thermosetting resin. First, particles are photographed using a scanning electromicroscope at a magnification ratio of 1000×, and the minor axis and the major axis of each of any 30 particles selected from the photographed image are measured. Next, the minor axis / major axis value of each particle is calculated, and the average value of the minor axis / major axis values of the 30 particles × 100 is regarded as the sphericity (%).

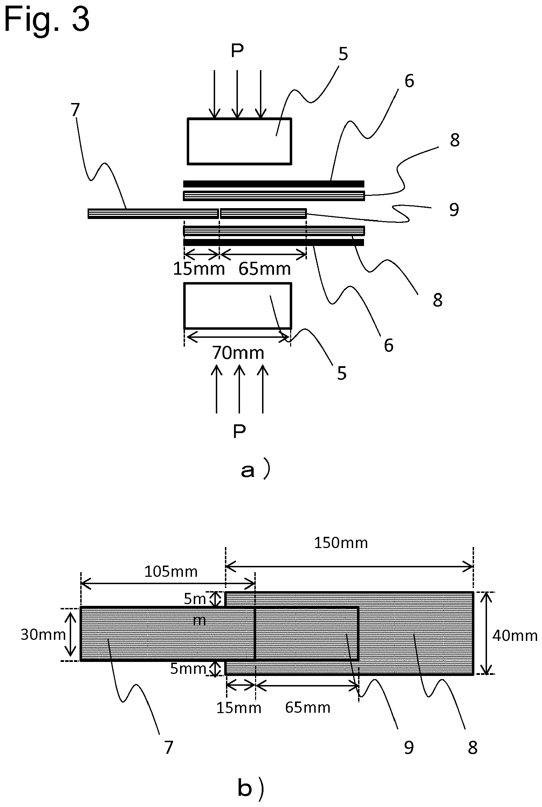

The prepreg according to the present invention is such that a temperature at which a coefficient of interlayer friction is 0.05 or less is in a temperature range of from 40 to 80°C, the interlayer friction being caused at the contact interface between layers of the prepreg when the middle one of three layers that are each made of the prepreg and laid up is pulled out, the coefficient of interlayer friction being measured at 10°C intervals in a temperature range of from 40 to 80°C under conditions including a pulling speed of 0.2 mm/min, a perpendicular stress of 0.08 MPa, and a pulling length of 1 mm. The coefficient of interlayer friction means a coefficient of friction that occurs between prepreg layers in a prepreg laminate composed of laid-up sheets of the prepreg. As shown in Fig. 3, one prepreg sheet 7 is sandwiched between two prepreg sheets 8, and, from outside of the prepreg plane, a predetermined load P (perpendicular load) is perpendicularly applied to the prepreg using pressure plates 5. The load obtained when the sandwiched prepreg 7 is pulled out is divided by twice that part of the perpendicular load which is given to the overlapping part, and the obtained value is regarded as a coefficient of interlayer friction. The reason why twice the perpendicular load is used for the division is that there are two prepreg surfaces which receive frictional resistance. In the test method, a prepreg is cut into a shape elongated in the fiber direction, and three prepreg sheets: a prepreg sheet 7 and prepreg sheets 8 are laid up to have the same fiber direction such that they overlap in an area having a width of 30 mm and a length of 15 mm. A prepreg having the same fiber direction is cut into a spacer 9 having a width of 30 mm, and the spacer 9 is disposed to contact the overlapping part of the prepreg 7 in the middle. As the prepreg is pulled out, the area of the overlapping parts decreases, and the region pressurized with the pressure plate 1 is biased. As a result, the pressure plate 1 may contact unevenly, whereby a high load may be locally applied. For this reason, the spacer 9 is disposed opposite to the pulling direction, thereby preventing the pressure plate 5 from being inclined. To the region in which the overlapping parts and the spacer are pressed using the pressure plates 5 (a region having a width of 30 mm and a length of 70 mm), a constant perpendicular load of 168 N is continuously applied throughout the test while controlling the temperature at a predetermined temperature with the pressure plates 5 having a heating source. The perpendicular load converted into a perpendicular stress is 0.08 MPa. After one minute from the start of perpendicular load application to the prepreg, the middle prepreg layer 7 is pulled out at a pulling speed of 0.2 mm/min in the fiber direction, during which the pulling load is measured. The pulling load is divided by twice the perpendicular load (36 N at the start of the test) applied to the overlapping parts (an area having a width of 30 mm and a length of 15 mm at the start of the test), and taken as the coefficient of interlayer friction. Here, together with the pulling out, the area of the overlapping part of the middle prepreg layer that receives the perpendicular load decreases. Therefore, suitably, assuming that the sum of the area of the overlapping part converted into a pulling length (an area having a width of 30 mm and a length of 15 mm - the pulling length) and the area that receives the load from the spacer (an area having a width of 30 mm and a length of 55 mm) receives 168 N, the perpendicular load applied to the overlapping part is proportionally calculated, and the pulling load is divided by twice the perpendicular load and taken as the coefficient of interlayer friction. The coefficient of interlayer friction varies not only with the temperature but also with the pulling speed and the perpendicular stress and over a time course. In the present invention, the coefficient of interlayer friction is measured at a pulling speed of 0.2 mm/min at a perpendicular stress of 0.08 MPa, five minutes after the start of pulling out, in other words, at a pulling length of 1 mm. The measurement is performed five times, and the average is taken as the coefficient of interlayer friction.

The prepreg according to the present invention is such that, in the measurement of the coefficient of interlayer friction, a temperature at which the coefficient of interlayer friction is 0.05 or less is in a temperature range of from 40 to 80°C. In the measurement of the coefficient of interlayer friction, a temperature at which the coefficient of interlayer friction is preferably 0.04 or less, more preferably 0.03 or less, particularly preferably 0.02 or less, is in a temperature range of from 40 to 80°C. It is still more preferable that, in the measurement of the coefficient of interlayer friction, a temperature at which the coefficient of interlayer friction is in the above-mentioned range is in a temperature range of from 50 to 80°C. Reducing the coefficient of interlayer friction is less likely to cause the layers in even the stretchable prepreg to mutually restrict in-plane deformation, and further enhances the drapeability. In a case where a temperature at which the coefficient of interlayer friction is 0.05 or less is not in a temperature range of from 40 to 80°C, making the prepreg laminate conform to a three dimensional shape in a temperature region that does not start the curing reaction, in other words, at about 80°C or less, is less likely to cause interlayer slippage and thus may cause wrinkles, even if forming is performed at a temperature that gives the minimum coefficient of interlayer friction.

Furthermore, in the measurement of the coefficient of interlayer friction, a temperature region in which the coefficient of interlayer friction is 0.05 or less in a temperature range of from 40 to 80°C preferably exists as a temperature region having a width of 20°C or more. In the step of forming a prepreg laminate, depending on the temperature control conditions, a temperature distribution often occurs in the prepreg laminate. Allowing the temperature region in which the coefficient of interlayer friction is 0.05 or less to exist as a temperature region having a width of 20°C or more can easily increase the amount of interlayer slippage in the prepreg in spite of any temperature ununiformity of the prepreg, because of which the prepreg is suitable for forming into a larger type of forming. A temperature at which the coefficient of interlayer friction is preferably 0.04 or less, more preferably 0.03 or less, particularly preferably 0.02 or less, is preferably in a temperature region having a width of 20°C or more.

A more preferred aspect of the present invention is a prepreg such that a temperature at which an increase rate of the coefficient of interlayer friction at a pulling length of 2 mm with respect to the coefficient of interlayer friction at a pulling length of 1 mm is within 40% is from 10°C less to 10°C more than the temperature at which the coefficient of interlayer friction is the lowest at a pulling length of 1 mm, in which the coefficient of interlayer friction is measured at 10°C intervals in a temperature range of 40 to 80°C under conditions including a pulling speed of 0.2 mm/min, a perpendicular stress of 0.08 MPa, a pulling length of 1 mm, and a pulling length of 2 mm. Preferably, there is a temperature at which the increase rate is 20% or less. The temperature region in which the increase rate is 40% or less more preferably has a width of 20°C or more, and the temperature region in which the increase rate is 20% or less still more preferably has a width of 20°C or more. The larger the prepreg laminate size is, the longer the distance up to the free end is, and thus a larger amount of interlayer slippage is required in order to eliminate the difference in distortion between the upper and under sides of the prepreg laminate. Therefore, it is preferable that the coefficient of interlayer friction does not rise too high with the interlayer slippage. Accordingly, the increase rate being small is a requirement suitable particularly for forming a large type of prepreg laminate whose surface area is greater than 1 m².

Here, the increase rate (%) refers to a value calculated using the equation: {(a coefficient of interlayer friction at a pulling length of 2 mm) - (a coefficient of interlayer friction at a pulling length of 1 mm)} / (a coefficient of interlayer friction at a pulling length of 1 mm) × 100.

A more preferred aspect of the present invention is a prepreg such that, when prepreg sheets are quasi-isotropically laid up, molded into a laminate, and cured, and the laminate is processed into a planar specimen as defined in ASTM D7137/7137M-07, the laminate has a compression strength after impact (CAI) of 250 MPa or more as measured in accordance with ASTM D7137/7137M-07. The compression strength after impact is preferably 300 MPa or more, and still more preferably 350 MPa or more. However, an actually feasible compression strength after impact is 450 MPa or less. Incidentally, the drop impact step, which causes delamination in the specimen, is performed in accordance with ASTM D7136/7136M-07. The test is performed five times, and the average is taken as CAI. Higher CAI indicates higher impact characteristics, and such a laminate is suitable for the design requirements of an aircraft structural member and contributes to weight reduction of the member. Here, "quasi-isotropically laid up" means that the prepreg sheets are laid up while making small shifts in the fiber direction, whereby the orientation of fibers is isotropic in the entire laminate. In the present invention, it means that four prepreg sheets are laid up with a difference of 45° each made between the fiber directions of the adjacent prepreg sheets.

A method of actually producing a prepreg having a low coefficient of interlayer friction according to the present invention is not limited to a particular one, and it is preferable that, at the boundary between the resin layer and the fiber layer, there exists a barrier layer composed of a resin whose viscosity is higher than that of the thermosetting resin in the resin layer in a temperature region within a range of from 40 to 80°C. The barrier layer has the effect of preventing the thermosetting resin in the resin layer from transferring into the fiber layer. When the prepreg laminate is heated and pressurized for forming, the thermosetting resin in the resin layer may transfer into the fiber layer. In such a case, the thermoplastic resin existing in the form of a solid in the resin layer, a hardener added in the form of a solid, and the like increase in ratio in the resin layer under a forming step temperature of 40 to 80°C, and these are more likely to interfere with the fibers in the fiber layer, resulting in an increase in the coefficient of interlayer friction. As opposed to this, providing the barrier layer for preventing the thermosetting resin in the resin layer from transferring into the fiber layer enables the increase in the coefficient of interlayer friction to be suppressed. In a case where the prepreg is stored for a long period of time, the thermosetting resin in the resin layer may transfer into the fiber layer, and owing to this, the resin constituting the barrier layer preferably has a higher viscosity than the thermosetting resin contained in the resin layer also at room temperature of 10 to 30°C.

In addition, the barrier layer may be dispersed in the thermosetting resin at a molding temperature, for example, at about 180°C, so as to form no layer in the obtained carbon fiber reinforced plastic.

In addition, the barrier layer may act as a lubricant under a forming step temperature of 40 to 80°C. The slippage of the barrier layer itself as a lubricant can further reduce the coefficient of interlayer friction. A resin acting as a lubricant is not limited to a particular one, and specifically, preferable examples include: thermoplastic resins; thermosetting resins that are solid at room temperature; films, non-woven fabrics, and particles made of mixtures thereof; and the like. For example, a barrier layer having a lubricant effect can be formed by disposing a resin that is solid at 25°C and has a viscosity of 10000 Pa·s or less at 80°C at the boundary between the resin layer and the fiber layer. A resin that is solid at 40°C and has a viscosity of 10000 Pa·s or less at 80°C is particularly preferable. The solidity at 40°C enhances the effect of preventing the transfer. Having a viscosity of 10000 Pa·s or less at 80°C, more preferably having a viscosity of 1000 Pa·s or less at 80°C, enhances the effect of the resin as a lubricant.

Specific examples of resins constituting the barrier layer include, but are not particularly limited to, epoxy resins, particularly bisphenol A type epoxy resins, bisphenol F type epoxy resins, biphenyl type epoxy resins, phenoxy resins, and the like.

Examples of means of providing the barrier layer include a method in which unidirectionally arranged carbon fibers are first impregnated with a thermosetting resin to form a fiber layer, then a resin constituting the barrier layer is disposed on at least one side of the fiber layer, and then a resin layer is disposed on the side on which the resin is disposed. In other words, the barrier layer can be provided between the fiber layer and the resin layer by disposing the resins on the carbon fibers through three steps. Examples of methods of disposing a resin constituting the barrier layer include, but are not particularly limited to: a method in which powder composed of the resin is sprayed onto the fiber layer; a method in which a film composed of the resin is laid up on the fiber layer; and the like.

The prepreg according to the present invention that is made into a laminate and used for hot forming has excellent conformity to a three dimensional shape, and may be used for not only hot forming but also press molding. A preform production step may be omitted in press molding, but when a preform is produced, it is preferable that the prepreg is pressed using a press machine in a range of from 40 to 80°C.

### EXAMPLES

Below, the present invention will be described in further detail through Examples. However, the present invention is not limited to the inventions described in Examples.

The resin raw materials used in Examples, as well as the preparation methods and evaluation methods for prepregs and carbon fiber reinforced plastics, will be shown below. Unless otherwise noted, the production environment and evaluation of the prepreg in Examples were performed in an atmosphere at a temperature of 25°C ± 2°C and a relative humidity of 50%.

### (1) Measurement of Compression Strength after Impact (CAI)

CAI was measured by the following operations (a) to (e).
(a) Sixteen prepreg plies were laid up in the laying-up form of [45/0/-45/90]_{2S} with respect to the length direction as 0°.
(b) The prepreg laminate was tightly covered with a polyamide film, then heated in an autoclave to 180°C at a temperature ramp rate of 1.5°C/min, and heat-pressurized and cured at a temperature of 180°C and a pressure of 7 kg/cm² for 2 hours, thereby forming a planar quasi-isotropic material (carbon fiber reinforced plastic).
(c) Assuming that the 0° direction was the length direction, a CAI specimen having a length of 150 ± 0.25 mm and a width of 100 ± 0.25 mm was cut out from the planar carbon fiber reinforced plastic.
(d) In accordance with the test method defined in ASTM D7136/7136M-07, a drop impact step and ultrasonic inspection were performed, and the damaged area was measured. The energy of the impact given to the panel was calculated from the average thickness of nine points of the molded plate, and was set at 28.4 J for all specimens.
(e) In accordance with the test method defined in ASTM D7137/7137M-07, the CAI was measured using "INSTRON (registered trademark)" Universal Tester, Model 4208. The number of the measured specimens was 5, and the average was taken as CAI.

### (2) Measurement of Coefficient of Interlayer Friction of Prepreg

The coefficient of interlayer friction was measured through the following operations (a) to (c).
(a) As shown in Fig. 3, defining 0° as the length direction, on a first-layer prepreg 8 cut to a width of 40 mm and a length of 150 mm, a second-layer prepreg 7 cut to a width of 30 mm and a length of 105 mm was laid up such that they overlapped in an area having a width of 30 mm and a length of 15 mm. Further, a prepreg to serve as a spacer 9 having a width of 30 mm and a length of 65 mm was laid up to contact the overlapping part of the second layer, and then a third-layer prepreg 8 having a width of 40 mm and a length of 150 mm was laid up to overlap the first layer.
   Subsequently, a release paper 6 having a width of 40 mm × a length of 150 mm was attached to overlap the outer sides of the first layer and the third layer.
(b) To the overlapping parts and a 10-mm-long area of the spacer (an area having a width of 30 mm and a length of 70 mm), a constant perpendicular load of 168 N was applied while controlling the temperature at a predetermined temperature with the pressure plate 5 having a heating source.
(c) After 30 seconds from the start of perpendicular load application, the second-layer prepreg was pulled out at a pulling speed of 0.2 mm/min in the fiber direction, during which the pulling load was measured. Together with the pulling out, the area of the overlapping part of the second-layer prepreg that receives the perpendicular load decreases. Therefore, the pulling load divided by twice the perpendicular load received by the area of the overlapping part converted into a pulling displacement, in other words, 168 N × (15 mm - the pulling displacement) / (70 mm - the pulling displacement) × 2, is taken as the coefficient of interlayer friction. The coefficients of interlayer friction after 5 minutes and 10 minutes from the start of pulling out, in other words, at pulling displacements of 1 mm and 2 mm respectively were each measured five times, and the respective averages were taken as the values of the coefficients of interlayer friction.

### (3) Hot Forming Test

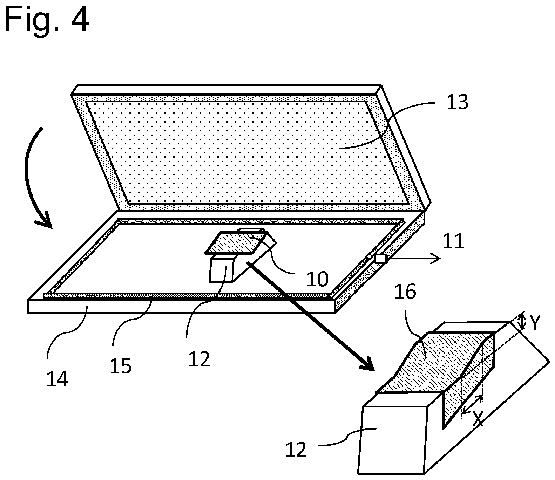

A hot forming test was performed, and the wrinkles were evaluated through the following operations (a) to (d).
(a) Sixteen prepreg sheets were laid up in the laying-up form of [45/-45/0/90]_{2S} with respect to the length direction as 0° to make a prepreg laminate having a width of 15 cm and a length of 15 cm.
(b) As shown in Fig. 4, a forming mold 12 which was 5 cm wide and 10 cm high and had a ramp having a length X of 6 cm and a height Y of 0.8 cm and whose edges all have a radius (R) of 5 mm was set on a frame 14 having a silicone rubber 13 and a seal 15, the prepreg laminate was set on the forming mold such that the length direction of the forming mold agreed with 0°, and the temperature was controlled for 30 minutes in an oven set to 60°C.
(c) The prepreg laminate 10 was disposed on the forming mold 12, and temperature-controlled in the oven for 10 minutes, followed by carrying out the evacuation 11 from the frame 14 over 150 seconds. As a result, a formed prepreg laminate 16, with both ends of the laminate being bent at 90°, was obtained.
(d) The wrinkles formed in the inner side of the bent portions of the formed prepreg laminate 16 were rated into the following two types: "wrinkles generated" and "no wrinkles".

### (4) Evaluation of Insolubility of Thermoplastic Resin Particles

Sixteen prepreg plies were laid up to have the same fiber direction. The prepreg laminate was tightly covered with a polyamide film, then heated in an autoclave to 180°C at a temperature ramp rate of 1.5°C/min, and heat-pressurized and cured at a temperature of 180°C and a pressure of 7 kg/cm² for 2 hours, thereby obtaining a unidirectionally reinforced material (carbon fiber reinforced plastic). Assuming that the fiber direction was 0°, this 0° cut cross-section of the unidirectionally reinforced material was ground until a clear interface was seen between the carbon fibers and the thermosetting resin; and the surface was observed under an optical microscope to observe thermoplastic resin particles in the resin layer existing between the fiber layers. At this time, in a case where a clear interface was seen between the granular thermoplastic resin particles and the surrounding thermosetting resin, the particles were considered to be insoluble. Contrarily, when the thermoplastic resin particles were not distinguishable from the surrounding thermosetting resin, the particles were considered to be soluble.

### (5) Preparation of Resin Composition

### (a) Preparation of Particles of Thermoplastic Resin Insoluble in Thermosetting Resin

Ninety parts by mass of a transparent polyamide (product name: "Grilamid (registered trademark)" - TR55, manufactured by EMSER Werke), 7.5 parts by mass of an epoxy resin (product name: "EPIKOTE (registered trademark)" 828, manufactured by Shell Petrochemical Co., Ltd.), and 2.5 parts by mass of a hardener (product name: "TOHMIDE (registered trademark)" #296, manufactured by Fuji Kasei Kogyo Co., Ltd.) were added to a solvent mixture containing 300 parts by mass of chloroform and 100 parts by mass of methanol, thereby giving a uniform solution. Next, the obtained uniform solution was atomized using a coating spray gun, and then sprayed toward the liquid surface of 3,000 parts by mass of n-hexane. The precipitated solid was separated by filtration, sufficiently washed with n-hexane, and then vacuum-dried at 100°C for 24 hours, thereby giving spherical epoxy modified polyamide particles insoluble in a thermosetting resin. The obtained epoxy modified polyamide particles were classified using a CCE classifier manufactured by CCE Technologies, Inc. The 90 vol% particle size of the obtained particles was 28 µm, and the CV value was 60%. In addition, as a result of the observation made as described herein under a scanning electromicroscope, the obtained powder was found to be in the form of fine particles having a sphericity of 96 with an average particle size of 14 µm.

### (b) Preparation of Thermosetting Resin Composition

The materials used for preparing the thermosetting resin compositions are as below-described.

### (Epoxy Resin)

- "Araldite (registered trademark)" MY9655 (tetraglycidyldiaminodiphenolmethane, manufactured by Huntsman Corporation)
- "EPON (registered trademark)" 825 (liquid bisphenol A type epoxy resin, manufactured by Hexion Inc.)

### (Thermoplastic Resin)

- "SUMIKAEXCEL (registered trademark)" PES5003P (polyethersulfone, manufactured by Sumitomo Chemical Co., Ltd.).

### (Hardener)

- "Aradur (registered trademark)" 9664-1 (4,4'-diaminodiphenyl sulfone, manufactured by Huntsman Corporation)

These were used to make the thermosetting resin compositions (A) to (D) using the following procedures.

### "Thermosetting Resin Composition (A)"

In a kneader, 13 parts by mass of PES5003P was added to and dissolved in 60 parts by mass of "Araldite (registered trademark)" MY9655 and 12.6 parts by mass of "Epon (registered trademark)" 825. Then, 45 parts by mass of "Aradur (registered trademark)" 9664-1 was added as a hardener, and the resulting mixture was further kneaded, thereby giving a thermosetting resin composition (A).

### "Thermosetting Resin Composition (B)"

In a kneader, 16 parts by mass of PES5003P was added to and dissolved in 60 parts by mass of "Araldite (registered trademark)" MY9655 and 40 parts by mass of "Epon (registered trademark)" 825, then 80 parts by mass of the thermoplastic resin particles prepared in the above-mentioned "(a) Preparation of Particles of Thermoplastic Resin" was added, and the resulting mixture was kneaded. Then, 45 parts by mass of "Aradur (registered trademark)" 9664-1 was added as a hardener, and the resulting mixture was further kneaded, thereby giving a thermosetting resin composition (B).

### "Thermosetting Resin Composition (C)"

In a kneader, 16 parts by mass of PES5003P was added to and dissolved in 60 parts by mass of "Araldite (registered trademark)" MY9655 and 40 parts by mass of "Epon (registered trademark)" 825. Then, 45 parts by mass of "Aradur (registered trademark)" 9664-1 was added as a hardener, and the resulting mixture was further kneaded, thereby giving a thermosetting resin composition (C).

### "Thermosetting Resin Composition (D)"

In a kneader, 13 parts by mass of PES5003P was added to and dissolved in 60 parts by mass of "Araldite (registered trademark)" MY9655 and 40 parts by mass of "Epon (registered trademark)" 825. Then, 45 parts by mass of "Aradur (registered trademark)" 9664-1 was added as a hardener, and the resulting mixture was further kneaded, thereby giving a thermosetting resin composition (D).

### (Example 1)

The thermosetting resin composition (A) was applied to a release paper using a knife coater, thereby producing two resin films each having a resin amount of 30 g/m². Next, the produced two resin films were each laid up on each side of a unidirectionally arranged carbon fiber sheet ("TORAYCA (registered trademark)" T800S-12K), and the resin was impregnated into the carbon fiber sheet by means of heating and pressurizing, thereby producing a fiber layer. Then, the solid epoxy resin "jER (registered trademark) 1001" (a bisphenol A type epoxy resin, manufactured by Mitsubishi Chemical Corporation) as a resin constituting the barrier layer was pulverized using a mortar so as to become powder, 10 g/m² of which was scattered over each of both surfaces of the previously produced fiber layer using a screen of 32 µm meshes. In this regard, the "jER (registered trademark)" 1001 was solid at 25°C, and the viscosity thereof measured using a viscoelasticity measuring instrument "ARES-G2" (manufactured by TA Instruments, Inc.) under conditions including a temperature ramp rate of 2°C/min, an oscillation frequency of 0.5 Hz, and parallel plates (having a diameter of 40 mm) was 120 Pa·s at 80°C. Then, both sides were sandwiched by release paper, sealed in a bagging film, and evacuated for 5 minutes with the temperature controlled at 60°C. Furthermore, the above-mentioned thermosetting resin composition (B) was applied to a release paper using a knife coater, thereby producing two resin films each having a resin amount of 30 g/m². The resin films were each laid up on the barrier layers placed on both sides of the fiber layer, sealed in a bagging film, and evacuated for 5 minutes with the temperature controlled at 50°C, whereby the resin layer containing thermoplastic resin particles insoluble in the thermosetting resin was laid up on the barrier layer.

In this manner, a prepreg, in which a barrier layer and a resin layer were disposed on each side of a fiber layer, the areal weight of fibers was 270 g/m², and the mass fraction of the matrix resin was 34 mass%, was produced. Then, the prepreg was pressed against a rotary blade roller having blades disposed on the predetermined positions of the roller, incisions were inserted so as to penetrate the prepreg, and thus carbon fibers were made discontinuous. The incisions were made over the whole region of the prepreg. The incision pattern was the pattern shown in Fig. 1, the length L of the disconnected carbon fibers was 30 mm, the length 1 was 1 mm, and the angle θ between the incisions and the arrangement direction of the carbon fibers was 14°.

Using the obtained prepreg, measurement of coefficients of interlayer friction, evaluation of insolubility, and testing of forming were performed. In addition, a carbon fiber reinforced plastic was produced using the obtained prepreg, and measured for CAI. The results are shown in Table 1 and Table 2.

### (Example 2)

The thermosetting resin composition (A) was applied to a release paper using a knife coater, thereby producing two resin films each having a resin amount of 30 g/m². Next, the produced two resin films were each laid up on each of both sides of a unidirectionally arranged carbon fiber sheet ("TORAYCA (registered trademark)" T800S-12K), and the resin was impregnated into the carbon fiber sheet by means of heating and pressurizing, thereby producing a fiber layer. Then, the solid epoxy resin "jER (registered trademark) 1001" as a resin constituting the barrier layer was pulverized using a mortar so as to become powder, 10 g/m² of which was scattered over each of both surfaces of the previously produced fiber layer using a screen of 32 µm meshes. Then, both sides were sandwiched by release paper, sealed in a bagging film, and evacuated for 5 minutes with the temperature controlled at 60°C. Furthermore, the thermosetting resin composition (C) was applied to a release paper using a knife coater, thereby producing two resin films each having a resin amount of 23 g/m². The resin films were each laid up on the barrier layers placed on both sides of the fiber layer, sealed in a bagging film, and evacuated for 5 minutes with the temperature controlled at 50°C. Furthermore, 7 g/m² each of PES5003P in particle form as solid thermoplastic resin particles soluble in the thermosetting resin was placed on each of both sides of the prepreg, whereby a resin layer containing thermoplastic resin particles soluble in the thermosetting resin was laid up on the barrier layer. In this manner, a prepreg, in which a barrier layer and a resin layer were disposed on each side of a fiber layer, the areal weight of fibers was 270 g/m², and the mass fraction of the matrix resin was 34 mass%, was produced.

Then, the prepreg was pressed against a rotary blade roller having blades disposed on the predetermined positions of the roller, incisions were inserted so as to penetrate the prepreg, and thus carbon fibers were made discontinuous. The incisions were made over the whole region of the prepreg. The incision pattern was the pattern shown in Fig. 1, the length L of the disconnected carbon fibers was 30 mm, the length 1 was 1 mm, and the angle θ between the incisions and the arrangement direction of the carbon fibers was 14°.

Using the obtained prepreg, measurement of coefficients of interlayer friction, evaluation of insolubility, and testing of forming were performed. In addition, a carbon fiber reinforced plastic was produced using the obtained prepreg, and measured for CAI. The results are shown in Table 1 and Table 2.

### (Example 3)

The thermosetting resin composition (D) was applied to a release paper using a knife coater, thereby producing two resin films each having a resin amount of 20 g/m². Next, the produced two resin films were each laid up on each of both sides of a unidirectionally arranged carbon fiber sheet ("TORAYCA (registered trademark)" T800S-12K), and the resin was impregnated into the carbon fiber sheet by means of heating and pressurizing, thereby producing a fiber layer. Then, the solid epoxy resin "jER (registered trademark) 1001" as a resin constituting the barrier layer was pulverized using a mortar so as to become powder, 10 g/m² of which was scattered over each of both surfaces of the previously produced fiber layer using a screen of 32 µm meshes. Then, both sides were sandwiched by release paper, sealed in a bagging film, and evacuated for 5 minutes with the temperature controlled at 60°C. Furthermore, the thermosetting resin composition (B) was applied to a release paper using a knife coater, thereby producing two resin films each having a resin amount of 30 g/m². The resin films were each laid up on the barrier layers placed on both sides of the fiber layer, sealed in a bagging film, and evacuated for 5 minutes with the temperature controlled at 50°C, whereby the resin layer containing thermoplastic resin particles insoluble in the thermosetting resin was laid up on the barrier layer. In this manner, a prepreg, in which a barrier layer and a resin layer were disposed on each side of a fiber layer, the areal weight of fibers was 190 g/m², and the mass fraction of the matrix resin was 39 mass%, was produced.

Then, the prepreg was pressed against a rotary blade roller having blades disposed on the predetermined positions of the roller, incisions were inserted so as to penetrate the prepreg, and thus carbon fibers were made discontinuous. The incisions were made over the whole region of the prepreg. The incision pattern was the pattern shown in Fig. 1, the length L of the disconnected carbon fibers was 30 mm, the length 1 was 1 mm, and the angle θ between the incisions and the arrangement direction of the carbon fibers was 14°.

Using the obtained prepreg, measurement of coefficients of interlayer friction, evaluation of insolubility, and testing of forming were performed. In addition, a carbon fiber reinforced plastic was produced using the obtained prepreg, and measured for CAI. The results are shown in Table 1 and Table 2.

### (Comparative Example 1)

The thermosetting resin composition (D) was applied to a release paper using a knife coater, thereby producing two resin films each having a resin amount of 30 g/m². Next, the produced two resin films were each laid up on each side of a unidirectionally arranged carbon fiber sheet ("TORAYCA (registered trademark)" T800S-12K), and the resin was impregnated into the carbon fiber sheet by means of heating and pressurizing on the same conditions as in Example 1, thereby producing a fiber layer. Furthermore, the thermosetting resin composition (B) was applied to a release paper using a knife coater, thereby producing two resin films each having a resin amount of 20 g/m². The resin films were laid up on both sides of the previously made fiber layer, and heated/pressurized, whereby the resin layer containing thermoplastic resin particles insoluble in the thermosetting resin was laid up on the fiber layer. In this manner, a prepreg, in which a resin layer was disposed on each side of a fiber layer, the areal weight of fibers was 190 g/m², and the mass fraction of the matrix resin was 34.5 mass%, was produced.

Then, the prepreg was pressed against a rotary blade roller having blades disposed on the predetermined positions of the roller, incisions were inserted so as to penetrate the prepreg, and thus carbon fibers were made discontinuous. The incisions were made over the whole region of the prepreg. The incision pattern was the pattern shown in Fig. 1, the length L of the disconnected carbon fibers was 30 mm, the length 1 was 1 mm, and the angle θ between the incisions and the arrangement direction of the carbon fibers was 14°.

Using the obtained prepreg, measurement of coefficients of interlayer friction, evaluation of insolubility, and testing of forming were performed. In addition, a carbon fiber reinforced plastic was produced using the obtained prepreg, and measured for CAI. The results are shown in Table 1 and Table 2.

### (Comparative Example 2)

The thermosetting resin composition (A) was applied to a release paper using a knife coater, thereby producing two resin films each having a resin amount of 30 g/m². Next, the produced two resin films were each laid up on each side of a unidirectionally arranged carbon fiber sheet ("TORAYCA (registered trademark)" T800S-12K), and the resin was impregnated into the carbon fiber sheet by means of heating and pressurizing, thereby producing a fiber layer. Then, the solid epoxy resin "jER (registered trademark) 1001" as a resin constituting the barrier layer was pulverized using a mortar so as to become powder, 10 g/m² of which was scattered over each of both surfaces of the previously produced fiber layer using a screen of 32 µm meshes. Then, both sides were sandwiched by release paper, sealed in a bagging film, and evacuated for 5 minutes with the temperature controlled at 60°C. Furthermore, the thermosetting resin composition (B) was applied to a release paper using a knife coater, thereby producing two resin films each having a resin amount of 30 g/m². The resin films were each laid up on the barrier layers placed on both sides of the fiber layer, sealed in a bagging film, and evacuated for 5 minutes with the temperature controlled at 50°C, whereby the resin layer containing thermoplastic resin particles insoluble in the thermosetting resin was laid up on the barrier layer. In this manner, a prepreg, in which a barrier layer and a resin layer were disposed on each side of a fiber layer, the areal weight of fibers was 270 g/m², and the mass fraction of the matrix resin was 34 mass%, was produced. An incision inserting step was not carried out, and accordingly the carbon fibers contained in the prepreg were all continuous carbon fibers without containing discontinuous carbon fibers.

Using the obtained prepreg, measurement of coefficients of interlayer friction, evaluation of insolubility, and testing of forming were performed. In addition, a carbon fiber reinforced plastic was produced using the obtained prepreg, and measured for CAI. The results are shown in Table 1 and Table 2.

### (Comparative Example 3)

The thermosetting resin composition (D) was applied to a release paper using a knife coater, thereby producing two resin films each having a resin amount of 40 g/m². Next, the produced two resin films were each laid up on each of both sides of a unidirectionally arranged carbon fiber sheet ("TORAYCA (registered trademark)" T800S-12K), and the resin was impregnated into the carbon fiber sheet by means of heating and pressurizing, thereby producing a fiber layer. Furthermore, the thermosetting resin composition (C) containing no thermoplastic particles was applied to a release paper using a knife coater, thereby producing two resin films each having a resin amount of 30 g/m². The resin films were laid up on both sides of the previously made fiber layer, and heated/pressurized, whereby the resin layer containing no thermoplastic resin particles was laid up on the fiber layer. In this manner, a prepreg, in which a resin layer was disposed on each side of a fiber layer, the areal weight of fibers was 270 g/m², and the mass fraction of the matrix resin was 34 mass%, was produced. An incision inserting step was not carried out, and accordingly the carbon fibers contained in the prepreg were all continuous carbon fibers without containing discontinuous carbon fibers.

Using the obtained prepreg, measurement of coefficients of interlayer friction and testing of forming were performed. In addition, a carbon fiber reinforced plastic was produced using the obtained prepreg, and measured for CAI. The results are shown in Table 1 and Table 2.

**[Table 1]**

| | Temperature (°C) | Example 1 | Example 2 | Example 3 | Comparative Example 1 | Comparative Example 2 | Comparative Example 3 |
|---|---|---|---|---|---|---|---|
| Coefficient of Interlayer Friction @ Pulling Length of 1mm | 40 | 0.144 | 0.147 | 0.142 | 0.149 | 0.143 | 0.060 |
| | 50 | 0.019 | 0.019 | 0.020 | 0.075 | 0.020 | 0.025 |
| | 60 | 0.018 | 0.018 | 0.019 | 0.051 | 0.018 | 0.020 |
| | 70 | 0.019 | 0.018 | 0.019 | 0.055 | 0.019 | 0.030 |
| | 80 | 0.022 | 0.021 | 0.021 | 0.063 | 0.022 | 0.033 |
| Coefficient of Interlayer Friction @ Pulling Length of 2mm | 40 | 0.154 | 0.153 | 0.145 | 0.154 | 0.148 | 0.100 |
| | 50 | 0.020 | 0.020 | 0.021 | 0.090 | 0.020 | 0.047 |
| | 60 | 0.019 | 0.019 | 0.020 | 0.061 | 0.019 | 0.030 |
| | 70 | 0.021 | 0.020 | 0.020 | 0.068 | 0.020 | 0.053 |
| | 80 | 0.025 | 0.024 | 0.023 | 0.082 | 0.024 | 0.061 |
| Increase Rate [%] of Coefficient of Interlayer Friction | 40 | 6.9 | 4.1 | 2.1 | 3.4 | 3.5 | 66.7 |
| | 50 | 5.3 | 5.3 | 5.0 | 20.0 | 0.0 | 88.0 |
| | 60 | 5.6 | 5.6 | 5.3 | 19.6 | 5.6 | 50.0 |
| | 70 | 10.5 | 11.1 | 5.3 | 23.6 | 5.3 | 76.7 |
| | 80 | 13.6 | 14.3 | 9.5 | 30.2 | 9.1 | 84.8 |

**[Table 2]**

| Item | Unit | Example 1 | Example 2 | Example 3 | Comparative Example 1 | Comparative Example 2 | Comparative Example 3 |
|---|---|---|---|---|---|---|---|
| Compression Strength After Impact (CAI) | MPa | 310 | 280 | 300 | 300 | 310 | 150 |
| Wrinkle Evaluation in Hot-forming Test | - | no wrinkle | no wrinkle | no wrinkle | wrinkles generated | wrinkles generated | wrinkles generated |
| Evaluation of Insolubility of Thermoplastic Resin Particles | - | insoluble | soluble | insoluble | insoluble | insoluble | - |

### Industrial Applicability

The prepreg according to the present invention can be formed into a wrinkle-free preform and is suitable for producing fiber reinforced plastics having good quality. The prepreg according to the present invention exhibits high mechanical property in fiber reinforced plastics made thereof, and accordingly can be extendedly used in structural applications such as aircrafts, spacecrafts, automobiles, railways, ships, electrical appliances, and sports articles.

### Reference Signs List

1: Fiber direction
2: Prepreg
3: Positive incision
4: Negative incision
5: Pressure plate
6: Release paper
7: Second-layer prepreg
8: First-layer, third-layer prepreg
9: Spacer prepreg
10: Prepreg laminate
11: Evacuation
12: Forming mold
13: Silicone rubber
14: Frame
15: Seal
16: Formed prepreg laminate
θ: Incision angle
L: Length of disconnected carbon fibers
l: Length of incision

## Claims

1. A prepreg, comprising:
a fiber layer containing unidirectionally arranged discontinuous carbon fibers and a thermosetting resin; and
a resin layer existing on at least one side of said fiber layer and containing a thermosetting resin and a thermoplastic resin;
wherein said prepreg contains carbon fibers having an areal weight of fibers of 120 to 300 g/m², and has a mass fraction of resin of 25 to 50% with respect to the whole mass of said prepreg; and
wherein a temperature at which a coefficient of interlayer friction is 0.05 or less is in a temperature range of from 40 to 80°C, the interlayer friction being caused at the contact interface between layers of said prepreg when the middle one of three layers that are each made of said prepreg and laid up is pulled out, said coefficient of interlayer friction being measured at 10°C intervals in a temperature range of from 40 to 80°C under conditions including a pulling speed of 0.2 mm/min, a perpendicular stress of 0.08 MPa, and a pulling length of 1 mm.

2. The prepreg according to claim 1, wherein said resin layer contains a solid thermoplastic resin soluble in a thermosetting resin.

3. The prepreg according to claim 2, wherein said solid thermoplastic resin soluble in said thermosetting resin is in the form of particles.

4. The prepreg according to any one of claims 1 to 3, wherein said resin layer contains a thermoplastic resin insoluble in said thermosetting resin.

5. The prepreg according to claim 4, wherein said thermoplastic resin insoluble in said thermosetting resin is in the form of particles.

6. The prepreg according to any one of claims 1 to 5, wherein, in measurement of said coefficient of interlayer friction, a temperature region in which said coefficient of interlayer friction is 0.05 or less exists as a temperature region having a width of 20°C or more.

7. The prepreg according to any one of claims 1 to 6, wherein, in measurement of said coefficient of interlayer friction, a temperature at which an increase rate of said coefficient of interlayer friction at a pulling length of 2 mm with respect to said coefficient of interlayer friction at a pulling length of 1 mm is within 40% is from 10°C less to 10°C more than the temperature at which said coefficient of interlayer friction is the lowest at a pulling length of 1 mm.

8. The prepreg according to any one of claims 1 to 7, wherein sheets of said prepreg which are quasi-isotropically laid up and molded have a compression strength after impact of 250 MPa or more as measured in accordance with ASTM D7137/7137M-07.

9. The prepreg according to any one of claims 1 to 8, wherein, at the boundary between said resin layer and said fiber layer, there exists a barrier layer composed of a resin whose viscosity is higher than that of said thermosetting resin in said resin layer in a temperature region within 40 to 80°C.

10. A method of producing said prepreg according to any one of claims 1 to 9, comprising a step of forming a fiber layer containing unidirectionally arranged discontinuous carbon fibers and a thermosetting resin by inserting incisions in unidirectionally arranged continuous carbon fibers in a fiber layer containing said unidirectionally arranged continuous carbon fibers and said thermosetting resin.
